# FASCICULE DE BREVET EUROPEEN

(11) **EP 0 642 846 B1**
(45) Date de publication et mention de la délivrance du brevet: **10.06.1998**
(21) Numéro de dépôt: 94430006.0
(22) Date de dépôt: 12.08.1994
(51) Int. Cl.: B08B 7/00, B23K 26/00, B08B 15/04, G21F 9/00, F22B 37/00, B23K 26/02

(54) **Procédé et dispositif de décontamination contrôlé de surface par laser**
Verfahren und Vorrichtung zur Überwachung von Oberflächen-Laserreinigung
Method and device for controlling laser decontamination of surfaces

(30) Priorité: 12.08.1993 FR 9310094
(43) Date de publication de la demande: 15.03.1995
(73) Titulaire: ONET Société Anonyme, 13008 Marseille (FR)
(72) Inventeur: Blin, Daniel, F-13410 Lambesc (FR); Peyrot, Isabelle, F-13011 Marseille (FR); Marine, Wladimir, F-13008 Marseille (FR); Sentis, Marc, F-13008 Marseille (FR)
(74) Mandataire: Somnier, Jean-Louis

(56) Documents cités:
- EP-A- 0 330 565
- DE-A- 3 824 047
- FR-A- 2 366 070
- US-A- 4 789 770
- US-A- 4 920 994
- US-A- 5 026 964
- US-A- 5 204 517
- PATENT ABSTRACTS OF JAPAN vol. 7, no. 222 (E-201) (1367) 4 Octobre 1983 & JP-A-58 112 327 (FUJITSU KK) 4 Juillet 1983
- DATABASE WPI Section Ch, Week 8908, Derwent Publications Ltd., London, GB; Class A, Page 35, AN 89-060744 08! & US-A-4 803 021 (AMOCO CORP.) 7 Février 1989
- PATENT ABSTRACTS OF JAPAN vol. 8, no. 152 (M-309) 14 Juillet 1984 & JP-A-59 047 086 (MITSUBISHI DENKI KK) 16 Mars 1984

## Description

La présente invention a pour objet un procédé et dispositif de décontamination autocontrôlé de surfaces par laser.

Le secteur technique de l'invention est le domaine du nettoyage.

Une des applications principales de l'invention est la décontamination de surfaces de locaux, d'équipements, de tuyauteries, de câbles, etc... contaminées par des radio-éléments ou des éléments chimiques et ne permettant pas en particulier à du personnel de séjourner trop longtemps près de ces surfaces. Cependant, d'autres applications sont envisageables dans le cadre du procédé et dispositif de la présente invention chaque fois que l'on veut nettoyer une surface sans modifier la structure du matériau qui la supporte, en évitant la redéposition des particules enlevées à cette surface et en limitant le temps de présence d'opérateurs, pour des raisons de sécurité ou de rentabilité et tout en assurant une couverture totale de la surface à traiter. On peut citer en particulier des applications telles que : l'agro-alimentaire, pour éliminer des moisissures par exemple ou toute présence d'éléments biologiques adhérant à une surface ; l'avionique, quand on veut enlever une couche superficielle de peinture sans abîmer la sous-couche ; la rénovation d'oeuvre d'art pour arracher les couches d'oxydes altérant une peinture ancienne en conservant les qualités de celle-ci...

Les principales applications de la présente invention se situent cependant dans les milieux dits extrêmes où il est indispensable d'acquérir ce que l'on appelle l'ultra-propreté : ceci est le cas des lieux contaminés pour lesquels il est essentiel d'obtenir de façon systématique ou ponctuelle une propreté définie par des normes spécifiques et pour lesquels l'état de la surface après traitement peut être déterminant pour le bon déroulement des activités suivantes ; cela peut donc concerner, comme indiqué ci-dessus, des domaines tels que le nucléaire et les laboratoires de recherche où sont manipulés certains produits particulièrement polluants, qu'ils soient chimiques, médicaux ou micro-électroniques, etc...

Dans toute la présente description, on appellera ainsi contamination d'une surface tout dépôt, présence, incrustation, adhérence ou fixation de particules ou organismes (par exemple des micro-organismes tels que des bactéries),volontairement ou involontairement sur un support, et comprenant des composants (atomiques,mono-atomiques,moléculaires, clasters, microparticules,etc) d'une nature différente de ceux de celui-ci. L'invention considérée concerne ainsi, suivant la définition ci-dessus, le nettoyage de cette contamination, soit la décontamination de telles surfaces en utilisant des procédés et dispositifs d'ablation par laser.

On connaît en effet de telles utilisations dans ce domaine, dont certains dispositifs et/ou procédés particuliers, suivant le type de salissure, de puissance, d'impulsion, de mise en oeuvre, etc. du laser, ont fait l'objet de dépôts de demandes de brevet, dont on peut citer quelques références ; sans compter les utilisations du laser pour détruire, cristalliser, graver, démouler...qui concernent également des traitements de surfaces sur un matériau mais dans un objectif différent du nettoyage seul de celles-ci et pour lesquels des dizaines d'autres demandes de brevets ont pu être déposées depuis moins de dix ans.

On relève ainsi la demande de brevet FR.2467656 concernant un "procédé et dispositif d'élimination de la rouille métallique" utilisant un rayon laser ayant des impulsions de durée de 1 à 100 microsecondes avec une énergie de 1 à 5 watts et une fréquence d'impulsion de 1 à 1000 hertz mais sans revendication particulière sur le type de laser retenu, ainsi que la demande de brevet FR 2366070 concernant un appareil d'aspiration de poussières en levée des stries formées par un faisceau laser sur les plaquettes de semi conducteur.

La demande EP.91947 décrit un dispositif "d'élimination au laser de matériaux adhérents à des surfaces" spécialement pour les coques de navires dont on veut éliminer les "bernacles" qui, subissant ainsi un choc, sont délogés de la coque, et le brevet US 5204517 décrit un système d'enlèvement de revêtement particulièrement de peinture sans endommager la surface du support.

La demande EP.350021 décrit un appareil pour "l'enlevage de contaminants de surface par irradiation à l'aide d'une source à haute énergie" en particulier pour obtenir des dispositifs de mesure plus performants comprenant des optiques ainsi débarrassés de tout contaminant grâce d'une part, à un gaz inerte passant continûment sur la surface à traiter et d'autre part, un laser émettant dans une fréquence ultraviolette de type "Excimer".

La demande EP. 380387 publiée le 1er août 1990 de l'Agence Régionale de Développement Technologique ARDT concerne un procédé "de nettoyage d'une surface par un laser" spécialement adapté pour la pierre ou autre matériau support dans un objectif de rajeunissement des monuments, des objets d'art, antiquités, etc... utilisant un laser dont la puissance crête est comprise entre quelques dixièmes de mégawatts par cm² et quelques dizaines de mégawatts par cm² et dont la longueur d'ondes de la source d'émission est comprise entre 500 et 1100 nanomètres.

Dans des applications nucléaires, on relève plus spécialement :
- la demande FR.2525380 publiée le 21 octobre 1983, de la société américaine WESTINGHOUSE ELECTRIC CORPORATION sur "un procédé de décontamination par laser" utilisant particulièrement un générateur de faisceau laser pulsé, dit Yag dopé au Néodyme, fournissant une densité d'énergie qui peut varier de 4,6 à 23 Joules/cm² et qui est adapté pour effectuer une pénétration thermique correspondant à l'épaisseur de la couche d'oxyde que l'on veut enlever : le laser utilisé est adapté pour fournir une densité d'énergie de 8,5 Joules/cm², émettant des impulsions d'environ 0,3 Joules chacune, de durée 30 à 40 nanosecondes et de longueur d'onde 1,06 micron ; le dispositif et le procédé décrits dans cette demande de brevet sont utilisés pour décontaminer les parois intérieures d'un volume tel qu'un générateur de vapeur d'eau de centrale nucléaire, comportant un trou d'homme et à partir duquel on crée un courant d'aspiration de l'ensemble de l'air situé dans le volume pour recueillir les contaminants dans des filtres situés sur ce courant d'air d'aspiration; ceci n'empêche pas cependant le redépôt de certaines particules radioactives en d'autres points du volume décontaminé, après le passage du laser de nettoyage, ce qui va à l'encontre du but recherché;
- les demandes EP.475806, 507641 et 520847 publiées respectivement les 18 mars 1992, 7 octobre 1992 et 30 décembre 1992, déposées par la même société FRAMATOME, concernent des appareils et des équipements de travail au laser dans des zones contaminées d'installation nucléaire, utilisant des générateurs laser, de type Yag, à impulsion et dont on veut obtenir une puissance de crête de l'ordre de 100 mégawatts à l'extrémité d'une fibre optique ; la première demande porte plus particulièrement sur un amplificateur de ce faisceau laser à l'extrémité de la fibre optique à l'endroit où l'on veut effectuer le traitement, la deuxième rajoute par rapport au premier des systèmes de miroirs de renvoi du faisceau sur la zone à traiter, en particulier dans les tuyauteries, et la troisième utilise au moins deux fibres optiques associées pour transporter deux faisceaux jusqu'à l'emplacement de la zone de travail où on combine ces deux lasers pour en amplifier la puissance ; dans ces deux dernières demandes citées, il est de plus décrit une enceinte de confinement, entourant l'extrémité du faisceau laser et la zone à traiter, et dans laquelle on balaye le volume par un gaz permettant de récupérer les particules contaminées et arrachées par le laser : cependant, ledit volume est relativement important, ne garantissant pas que lesdites particules ne se redéposent pas à l'intérieur de ladite enceinte à côté de la zone traitée.

Tous ces équipements et procédés connus montrent bien que le principe du nettoyage et/ou de la décontamination de surface par un laser est connu et permet diverses applications dont certaines nécessitent des équipements complémentaires et un choix particulier du type de laser, en terme de fréquence, puissance, impulsion, etc... mais aucun de ces dispositifs et méthodes, même s'ils répondent à certains besoins, n'est vraiment satisfaisant à ce jour quand on veut en particulier comme indiqué en introduction, à la fois décontaminer une surface sans modifier la structure du matériau dont elle constitue l'enveloppe, et éviter le redépôt des particules enlevées afin de rendre ladite surface et son support réutilisables.

En effet, dans tous les documents cités ci-dessus, on a souvent, pour certains choix de laser, une fusion d'une épaisseur assez importante de matériau sous la surface à traiter : ceci, d'une part, en modifie la structure et peut laisser des contraintes résiduelles gênantes suivant l'utilisation ultérieure de l'équipement nettoyé, et d'autre part, referme les fissures, criques, piqûres ou autres pouvant exister dans ce matériau, piégeant ainsi la contamination qui n'a pas été enlevée et/ou modifiée. Dans d'autres documents comme dans certains cités ci-dessus, les particules arrachées grâce au laser peuvent se redéposer plus loin et/ou polluer l'atmosphère environnante, ce qui dans certains cas, tel que pour la contamination nucléaire ou biologique peut être dangereux pour l'environnement.

De plus, dans tous les équipements connus, il est nécessaire de contrôler après coup si le niveau de décontamination recherché a bien été obtenu, et si ce n'est pas le cas, il faut alors revenir sur les endroits mal traités initialement, occasionnant entre autres des pertes de temps et des coûts supplémentaires avec des risques de recontamination.

Aussi, le problème posé est de pouvoir décontaminer une surface, sans modifier la structure du matériau, en évitant le redépôt des particules enlevées et en contrôlant en temps réel le niveau de décontamination obtenu tout au long du traitement afin d'adapter celui-ci immédiatement pour obtenir le résultat de nettoyage souhaité; l'objectif recherché est donc d'une part, de conserver au support un état de surface compatible avec son utilisation postérieure au traitement, d'autre part, d'éliminer les débris ou particules produits lors de l'interaction laser/matière afin de ne recontaminer ni la surface traitée, ni l'environnement avec ces particules, et enfin de maîtriser parfaitement le résultat du traitement obtenu in situ et en temps réel, afin de déterminer avec justesse l'état de surface du matériau obtenu afin d'être sûr que le niveau de décontamination voulu est atteint en un seul passage de nettoyage et/ou de traitement.

Une solution au problème posé est un procédé de décontamination de surface d'un matériau, dont on veut enlever toutes particules ou organismes, comprenant des composants de contaminants déterminés et de tout dérivé de ceux-ci et pouvant être fixées ou déposées sur ladite surface, et utilisant au moins un faisceau laser pulsé dans la gamme de longueur d'ondes de l'ultraviolet et projeté sur ladite surface, et un dispositif d'aspiration de gaz disposé à proximité de la zone traitée par l'extrémité dudit faisceau laser, tel que :
- on déplace ledit faisceau relativement par rapport à ladite surface, suivant un tracé déterminé pour traiter l'ensemble de celle-ci ;
- on règle la densité d'énergie dudit faisceau entre 0,25 et 8 joules/cm² en fonction des caractéristiques dudit matériau à traiter, et sa fréquence d'impulsion entre 0,5 et 500 hertz en fonction de la vitesse de déplacement dudit faisceau sur ladite surface, celui-ci éjectant, au fur et à mesure et d'une manière connue, des particules arrachées de la zone traitée en formant au-dessus de celle-ci un panache de particules monoatomiques, molécules, clasters, microparticules ;
- on choisit la longueur d'ondes dudit faisceau laser dans la gamme de 190 à 360 nanomètres, avec une durée d'impulsion comprise entre 10 et 250 nanosecondes, suivant la nature du matériau et l'épaisseur de celui-ci dont on veut éliminer lesdites particules ainsi que l'épaisseur de ladite surface ;
- on aspire le gaz ambiant par une bouche d'aspiration dirigée vers ledit faisceau laser et, suivant la présente invention :
- on aspire ledit gaz ambiant tout autour du panache grâce à une bouche d'aspiration entourant ledit faisceau laser symétriquement suivant son axe XX' et disposée assez proche de la surface ;
- on dispose un système optique permettant de mesurer l'intensité de fréquences d'émission spécifique desdits composants de contaminants déterminés desdites particules à enlever, ledit système optique comportant tout moyen pour capter lesdites émissions desdits composants de contaminants dans ledit panache au voisinage de ladite bouche d'aspiration, et tel que :
- on mesure au moins deux fréquences d'émission dont l'une est celle des composants décontaminants et l'autre ou les autres, celles d'au moins un dérivé desdits contaminants issu de la réaction du faisceau laser sur la surface du matériau ou préexistant dans cette surface ou dans l'air ambiant.

De préférence, dans cette dernière opération, on mesure l'intensité de fréquences d'émissions obtenue en calculant la somme d'au moins deux intensités de fréquences d'émission intégrées par rapport au temps, dont au moins une est celle des composants décontaminants et l'autre ou les autres, celles d'au moins un dérivé desdits contaminants issu de la réaction du faisceau laser sur la surface du matériau ou préexistant dans cette surface ou dans l'air ambiant, ou formé dans le panache avec un quelconque gaz présent.

Dans un mode préférentiel de réalisation, on dispose au moins un orifice d'injection d'un gaz réactif dirigé vers le point d'impact sur la zone traitée par le faisceau laser ; ledit gaz réactif est mélangé avec lesdites particules du panache par ladite bouche d'aspiration et on détecte au moins une fréquence d'émission des particules et/ou micro-organismes issus des réactions avec le gaz.

Dans un mode de réalisation dudit procédé ci-dessus, on effectue au moins deux tirs d'impulsion laser sur chaque dite zone traitée et on contrôle la somme des intensités de fréquences d'émission desdits composants de contaminants déterminés dans les particules enlevées et situées (ou formées) dans le panache du deuxième tir, et si la valeur obtenue de cette intensité est supérieure à un seuil donné, on continue les tirs sur la même zone sans déplacement du laser, et jusqu'à obtenir au plus ce seuil ; on règle ainsi la vitesse relative de déplacement du faisceau laser et son taux de répétition en fonction, par rapport à ce seuil donné, de ladite mesure de l'intensité de fréquences d'émission spécifique desdits composants déterminés pouvant être contenus dans les particules arrachées.

Lesdites fréquences d'émission détectées sont au nombre minimum de deux à partir d'espèces atomiques et moléculaires issues de ladite surface, ablatées ou formées dans le panache avec le gaz réactif. On entend par mesure de l'intensité la somme de deux au minimum desdites intensités intégrées par rapport au temps.

L'objectif de l'invention est également obtenu par un dispositif de décontamination de surface d'un matériau, sur lequel sont fixées ou déposées toutes particules ou organismes, comprenant des composants de contaminants déterminés et devant faire l'objet de ladite décontamination, comprenant au moins un faisceau laser pulsé dans la gamme de longueur d'ondes de l'ultraviolet et projeté par tout moyen sur ladite surface, et un dispositif d'aspiration de gaz disposé au voisinage de la zone traitée par ledit faisceau laser, lequel dispositif de décontamination comprend une bouche d'aspiration dirigée vers ledit faisceau laser et tout système permettant le déplacement de l'ensemble du dispositif de décontamination relativement par rapport à ladite surface à nettoyer suivant un tracé déterminé dudit faisceau laser pour traiter l'ensemble de celle-ci, lequel faisceau laser éjecte, au fur et à mesure et d'une manière connue, des particules arrachées à la zone à traiter en formant un panache au-dessus de celle-ci. Le dispositif suivant l'invention est tel que ledit faisceau laser est dans une gamme de longueur d'ondes comprise entre 190 et 360 nanomètres, et suivant le type de la source laser choisie, d'une durée d'impulsion entre 10 et 250 nanosecondes, la densité d'énergie du faisceau laser étant définie entre 0,25 et 8 Joules/cm² suivant la nature et les caractéristiques du matériau et l'épaisseur de la couche contaminée et celle du support et dans laquelle se situent lesdites particules que l'on veut éliminer, ladite bouche d'aspiration entourant ledit faisceau laser symétriquement suivant son axe XX' et disposée assez proche de la surface, entoure au moins l'extrémité supérieure dudit panache, est située à une distance l de la surface au plus égale à la hauteur h de ce panache et a un diamètre d supérieur à celui dudit panache et inférieur à trois fois celui-ci.

Ledit dispositif selon l'invention comprend un système optique permettant de mesurer la somme des intensités intégrées d'au moins deux fréquences d'émission spécifique desdits contaminants déterminés pouvant être contenus dans les particules à arracher, et d'au moins un dérivé desdits contaminants, lequel système optique comporte tout moyen pour capter lesdites émissions dans ledit panache au voisinage de ladite bouche d'aspiration.

Le résultat est de nouveaux procédés et dispositifs de décontamination de surface par laser répondant au problème et aux objectifs fixés et permettant d'éliminer les inconvénients des systèmes connus à ce jour et qui ne permettent pas justement d'obtenir les objectifs définis ci-dessus.

En effet, le type de laser choisi et utilisé dans la présente invention, en fonction des caractéristiques indiquées précédemment, doit pouvoir enlever par ablation, avec un effet de fusion sur la seule couche superficielle qui doit être arrachée à la surface du matériau, les particules contaminantes sans détériorer le matériau support situé en dessous, et tout en atteignant les particules contaminées que l'on veut enlever dans les micro-fissurations au moins de surface, suivant les cas. Le type de laser retenu ne provoque pas ainsi d'échauffement ou de fusion de la matière en profondeur au-delà de celle qui est arrachée, de manière à ne pas enfermer définitivement la contamination dans les micro-fissures éventuelles, ou même dans une sous-couche, comme c'est le cas dans certains types de laser indiqués de certains documents de l'art antérieur.

C'est pourquoi en particulier les lasers retenus émettent dans le domaine de l'ultraviolet, ce qui a pour effet de briser directement les liaisons intermoléculaires : le processus physique mis en jeu est en effet la photoablation et la fusion de surface, maîtrisées selon le résultat attendu ; ce processus met à profit le taux d'absorption élevé de ce type de laser, tel que pour différents oxydes en surface d'acier inoxydable par exemple, 10⁵ à 10⁶ cm-¹ contre 10² à 10⁴ cm-¹ pour les autres lasers : le taux de pénétration est ainsi faible dans le matériau irradié par ledit laser, avec un maximum de quelques centaines d'angström alors que pour les autres lasers, on obtient 10 à 1000 fois plus de profondeur de pénétration, ce qui d'une part, ferme alors les criques, piqûres ou fissurations éventuelles en piégeant la contamination qui s'y trouverait et d'autre part, modifie la structure du matériau, provoquant des contraintes résiduelles et éventuellement gênantes.

Suivant la présente invention, il est possible, après le traitement de décontamination par exemple, d'effectuer un traitement de lissage de la surface mais qui, étant d'une part, contrôlé et d'autre part, ne concernant par le choix du laser que la couche superficielle, ne modifie pas la structure ni ne provoque de contraintes résiduelles dans le support : on améliore ainsi son état de surface par un lissage bénéfique qui, entre autres, réduit le risque d'accrochage d'autres particules contaminantes par la suite.

L'invention s'applique à divers types de matériaux quel que soit leur état de surface, qu'ils soient lisses ou présentant des aspérités, recouverts de salissures, de couches d'oxyde, de films quelconques, tels que peinture, graisse, vernis, etc..., ou ayant subi un traitement thermique, chimique, mécanique ou un vieillissement quelconque ; les paramètres d'utilisation du procédé et du dispositif suivant l'invention seront donc choisis en ce qui concerne le nombre d'impulsions, la fréquence des utilisations, la densité d'énergie, la vitesse de balayage, la taille du faisceau, la focalisation, etc... dans les plages de valeur indiquées précédemment.

De plus, le dispositif particulier selon l'invention permet l'aspiration localement des particules arrachées au niveau du panache formé par l'ablation de celles-ci de la surface à nettoyer : ceci assure une totale reprise de l'ensemble de ces particules et débris, sans qu'il y ait des risques de redépôt de ceux-ci sur la surface une fois nettoyée ; la distance particulière assez proche de la bouche d'aspiration par rapport à la surface et son ouverture par rapport aux dimensions du panache, permettent d'autant mieux une telle aspiration, aidées en cela par une forme particulière éventuelle de l'enceinte entourant cette bouche d'aspiration, créant un effet d'accélération du gaz ambiant autour dudit panache, dans cette bouche d'aspiration, empêchant ainsi tout redépôt desdits débris ou particules.

La bouche d'aspiration évite ainsi le déplacement de la contamination de l'endroit traité à un autre endroit ; par ailleurs, étant de dimensions assez réduites, cette bouche autorise un débit assez faible, ce qui permet de n'avoir à filtrer ensuite qu'une faible quantité de gaz chargé d'impuretés, réduisant alors la surface et la quantité des filtres nécessaires pour cela. Cette aspiration évite également tout contact avec la surface contaminée, réduisant la quantité de produits pouvant être contaminée par contact, ce qui est parfois gênant pour les produits de contamination nucléaire en particulier.

La combinaison des éléments du dispositif ci-dessus, déjà innovante en elle-même, avec un système optique permettant de mesurer l'intensité de fréquences d'émission spécifique de composants déterminés et de tout dérivé contenus dans les particules enlevées au moment et à l'endroit où celles-ci sont arrachées, permet par contrôle, à partir d'un seuil donné, de l'intensité intégrée d'émission, de régler les caractéristiques du faisceau laser : elles peuvent en effet être réglables, pour adapter celui-ci au but du nettoyage recherché, permettant ainsi une seule opération et garantissant le résultat, sans nécessité de reprise de nettoyage décontaminant une deuxième fois aux mêmes endroits.

Cette mesure optique peut être réalisée sur les raies d'émission des particules arrachées au niveau dudit panache qu'elles forment et permet de savoir si cesdites particules sont chargées des composants contaminants et de ses dérivés que l'on veut éliminer et, quand de telles raies d'émission dans cesdites particules sont en-dessous d'un certain seuil déterminé, on considère que la surface nettoyée est bien décontaminée au niveau voulu ; ce contrôle optique étant réalisé de préférence dans le panache d'un deuxième tir d'impulsion du laser effectué sur chaque zone traitée, on peut alors déplacer le faisceau laser sur ladite surface et au contraire, si le niveau d'émission des raies desdites particules est trop élevé, on demeure au même endroit et on continue de tirer d'autres impulsions sur cette même zone ; on peut augmenter par ailleurs l'énergie dudit laser pour accélérer la vitesse de traitement.

Si l'intensité d'émission desdites particules est par contre en-dessous d'un seuil encore plus faible que le précédent, on peut bien sûr accélérer la vitesse de déplacement et/ou diminuer l'énergie du laser.

Une innovation de la présente invention est également de mesurer au moins deux fréquences d'émission dont l'une est celle des composants décontaminants et l'autre, ou les autres, celles d'au moins un dérivé desdits contaminants, car en effet, lors de l'action du faisceau laser sur la surface du matériau ou même préexistant à la surface de celui-ci ou même dans l'air ambiant, il peut y avoir des dérivés ou des composants transformés du contaminant de base et cela d'autant plus, du reste, quand on rajoute du gaz réactif, tel que décrit ci-après pour accélérer l'effet d'aspiration d'une part, mais également augmenter la vitesse de réaction en phase gazeuse des métaux décontaminants : on peut donc avoir dans le panache ou dans ladite bouche d'aspiration des composants qui ne sont pas uniquement ceux du produit que l'on veut décontaminer, mais des dérivés qu'il est nécessaire de pouvoir éliminer également; la possibilité est de pouvoir mesurer ainsi au moins deux fréquences et de pouvoir vérifier que toute forme dérivée du contaminant et le contaminant lui-même ont été éliminés de ladite surface et assurer que la décontamination a atteint son objectif; dans les systèmes où une seule fréquence ou une seule gamme de fréquences serait mesurée, on n'est pas sûr qu'à la fin de la réaction des dérivés du contaminant ne subsisteraient pas dans la surface ou dans l'air ambiant environnant, ce qui ne permettrait pas de garantir le résultat de la présente invention.

Tout ceci permet également de pouvoir intégrer, par la programmation de l'unité de contrôle et de conduite, un système automatique de pilotage du dispositif de décontamination qui peut être alors utilisé par exemple au bout d'un bras télé-manipulateur évitant ainsi toute intervention de personnel sur le lieu de nettoyage.

Ceci est très important, en particulier dans l'exploitation de centrales nucléaires ou d'usines similaires, car certains équipements sont exposés aux radiations entraînant une activation de leurs composants et subissent normalement ou accidentellement une contamination par des particules radioactives : certains états de surface fixent plus facilement que d'autres ces contaminations telles que des fissures par exemple et des débits de doses résultant de ces interactions peuvent être très élevés. Or, il est nécessaire que les personnes interviennent sur ces équipements pour effectuer diverses opérations mais celles-ci sont alors limitées dans le temps en fonction des débits de doses constatés et des normes limitant les doses intégrées, donc le temps direct d'exposition ; même dans le cas d'utilisation de systèmes robotisés, ceux-ci peuvent être amenés à se mouvoir d'une cellule vers une autre, il faut donc diminuer globalement le taux de contamination des composants des cellules nucléaires.

La solution la plus évidente est bien sûr de réduire le champ radioactif associé aux composants nucléaires sur lequel le travail doit s'effectuer : pour cela, il faut arracher la couche radioactive déposée sur la surface des composants concernés et cela avec une efficacité certaine et un automatisme le plus complet, ce qui est possible grâce à la présente invention telle que définie ci-dessus et ci-après, alors que cela n'est pas le cas à ce jour.

On pourrait citer d'autres avantages de la présente invention, tel que le fait qu'il n'y ait pas création de déchets industriels résiduels ou secondaires, comme des fluides de nettoyage, des matériaux de contact, etc..., en dehors des filtres qui sont alors les seuls consommables et encore en taille et en quantité réduites, ce qui est important pour la protection de l'environnement par réduction du volume total des déchets.

Ainsi, les avantages cités ci-dessus sont suffisants pour démontrer la nouveauté et l'intérêt de l'invention ; la description et les figures ci-après représentent un exemple de réalisation de l'invention mais n'ont aucun caractère limitatif : d'autres réalisations sont possibles dans le cadre de la portée et de l'étendue de cette invention, en particulier en changeant la forme de l'enceinte d'aspiration, les divers dispositifs d'amenée du faisceau laser, ainsi que les dispositifs de contrôle optique.

La figure 1 est une vue en coupe latérale d'une partie du dispositif suivant l'invention.

La figure 2 est une vue de dessus de la surface à nettoyer en cours d'opération.

La figure 3 est une vue en coupe latérale de l'ensemble du dispositif suivant l'invention.

Le dispositif doit permettre l'élimination de toute contamination d'une surface 3 d'un matériau 2 : cette contamination est déterminée tel qu'indiqué en introduction, comme étant le dépôt ou la fixation de toute particule sur ledit support 2 constituant alors une épaisseur 4 superficielle et comprenant des composants d'une nature différente de ceux de celui-ci, lequel dépôt ou laquelle fixation ayant pu être fait involontairement ou volontairement.

Le dispositif selon l'invention comprend au moins un faisceau laser 1 connu, pulsé dans la gamme des longueurs d'onde à ultraviolet, de type dit Excimer (Excited dimers) ou Exciplex (Excited Complex) dont les milieux actifs sont constitués d'un mélange de gaz rares ionisés. Les plus connus et utilisables dans la présente invention sont tels que :

| Mélange : | Longueur d'onde : |
|---|---|
| ArF | 193 nanomètres |
| KrF | 248 nanomètres |
| XeCl | 308 nanomètres |
| XeF | 351 nanomètres |

D'autres lasers peuvent également convenir dans le cadre de la présente invention dans une gamme de longueurs d'ondes de 190 à 360 nanomètres.

Sous l'action d'une décharge à haute tension en un laps de temps très court, un plasma est créé dans ces sources lasers, dans lequel les atomes des gaz sont fortement ionisés et réagissent entre eux : lorsque les molécules descendent à leur niveau d'excitation le plus faible, l'effet laser est immédiat ; ces sources sont donc super radiantes et ne nécessitent pas de préchauffage ; l'effet de tels lasers, pulsés ou impulsionnels, permet une ablation de la couche superficielle 4 du matériau sans pénétration dans le support 2 situé en dessous, l'épaisseur de la couche 4 concernée par la fusion-ablation créée par le laser, ne représentant que quelques centaines d'angström ; la durée d'impulsion, la densité d'énergie du faisceau et sa fréquence d'impulsions sont déterminées dans les plages de valeurs indiquées précédemment, en fonction de la nature du matériau, du type de décontamination voulu et/ou de traitement souhaité ainsi que de la vitesse dudit traitement.

En combinaison avec ce faisceau laser 1, le dispositif suivant l'invention comprend un dispositif d'aspiration 10 de gaz au voisinage de la zone 11 traitée par ledit laser, et disposé près de la surface superficielle 3 dont on doit arracher les particules qui la composent : celles-ci forment au-dessus de cette zone 11, un panache 7 de particules éjectées, ou plume. L'aspiration du gaz ambiant est réalisé autour de ce panache 7 grâce à une bouche d'aspiration 9 entourant ledit faisceau laser 1 symétriquement suivant son axe XX'. Pour améliorer l'effet d'aspiration, l'ouverture de ladite bouche d'aspiration 9 entoure au moins l'extrémité supérieure du panache 7 et est située à une distance l de la surface 3, au plus égale à la hauteur de ce panache 7 ; de plus, son diamètre d'ouverture d est supérieur à celui d' dudit panache 7, tout en étant inférieur à 3 fois celui-ci, et de préférence de dimension minimale D + l, D étant le diamètre du point d'impact 11 sur la zone traitée du laser 1 : ceci permet d'obtenir un optimum de débit le plus faible possible, tout en ayant une vitesse suffisante d'accélération du débit de gaz dans l'embouchure, afin d'être sûr que toutes les particules 8 arrachées à la surface 3 soient aspirées dans l'enceinte 10 du dispositif d'aspiration.

Pour améliorer encore cet effet d'accélération de l'aspiration autour du point d'impact 11 et dans l'orifice d'aspiration 9, la forme extérieure de l'enceinte du dispositif d'aspiration 10 autour de cet orifice de bouche d'aspiration et en regard de la surface 3, est de préférence paraboloïde de révolution autour de l'axe XX' du laser 1 : celui-ci crée un effet d'accélération du gaz ambiant entre la surface extérieure de l'enceinte et le support à traiter 2, et cela symétriquement tout autour du point d'impact 11 et du panache 7. Par ailleurs, à l'intérieur de l'enceinte 10, il doit de préférence n'exister aucun angle risquant de piéger des particules contaminées qui puissent s'y accumuler : ainsi toutes les formes intérieures de l'enceinte peuvent également être des paraboloïdes de révolution autour de l'axe du laser et de la bouche d'aspiration 9 se raccordant tangentiellement à des cylindres également de révolution.

Du fait du traitement par ablation de la couche superficielle 3 de l'épaisseur 4 que l'on veut enlever sans transformer la surface du support 2 situé en-dessous, s'il existe des fissures 6 dans ledit support, celles-ci resteront parfaitement dégagées et la surface 5 ainsi traitée n'aura subi aucune contrainte résiduelle de structure.

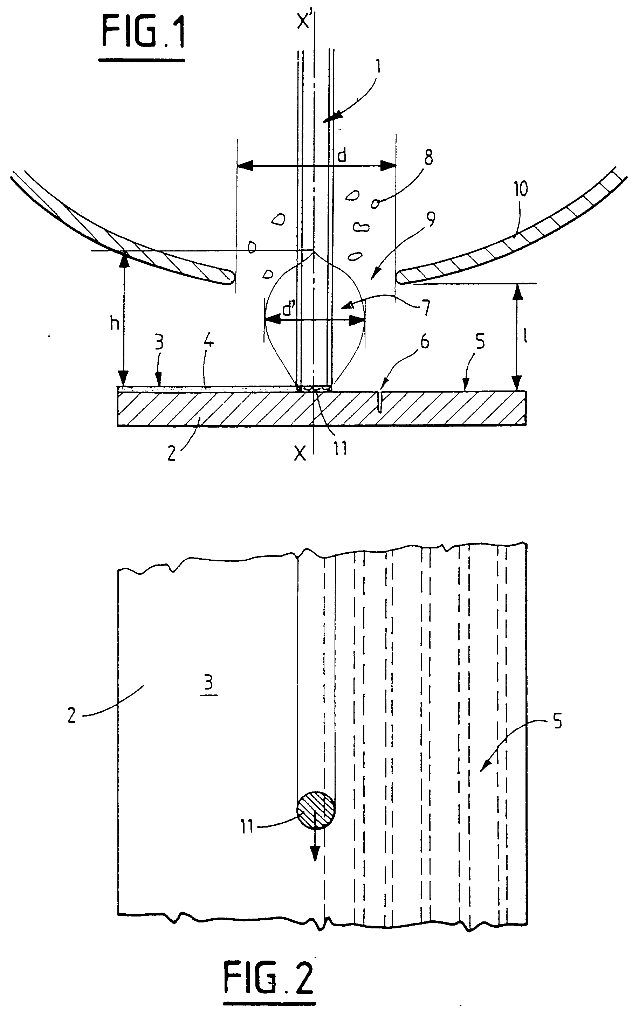

Suivant la figure 2, on déplace ledit faisceau 1 avec l'ensemble du dispositif d'aspiration 10, tel que par un support de bras manipulateur par exemple : on peut ainsi faire effectuer audit laser un tracé déterminé pour traiter l'ensemble de la surface 3 du support 2 que l'on veut nettoyer, en balayant par le point d'impact 11 du laser, cette surface suivant des tracés parallèles par exemple ; un recouvrement de chaque passage de 30 à 50% par exemple sur le précédent, permet d'être sûr que la surface à traiter 5 soit parfaitement nettoyée dans les limites de seuil de décontamination voulue. Suivant d'autres applications, on peut inversement déplacer la surface à traiter par rapport au dispositif de décontamination qui serait fixe.

De plus, on peut également effectuer au moins un deuxième passage par déplacement relatif de ce même faisceau 1 sur ladite surface 3, avant ou après nettoyage, avec des paramètres et des réglages dudit faisceau laser 1 différents, afin de faire subir à cette surface au moins un deuxième traitement différent de celui du nettoyage et suivant les mêmes phases de procéder que pour celui-ci : par exemple, après une décontamination, un second traitement peut être alors effectué sur ce matériau support 2, afin de lisser sa surface 5 et de permettre une meilleure résistance à la corrosion d'une part, et à la recontamination d'autre part, grâce à l'effet de lissage induit par ablation laser à l'aide de ces lasers ultraviolets qui concentrent l'énergie en un faible volume du fait de leur faible pénétration..

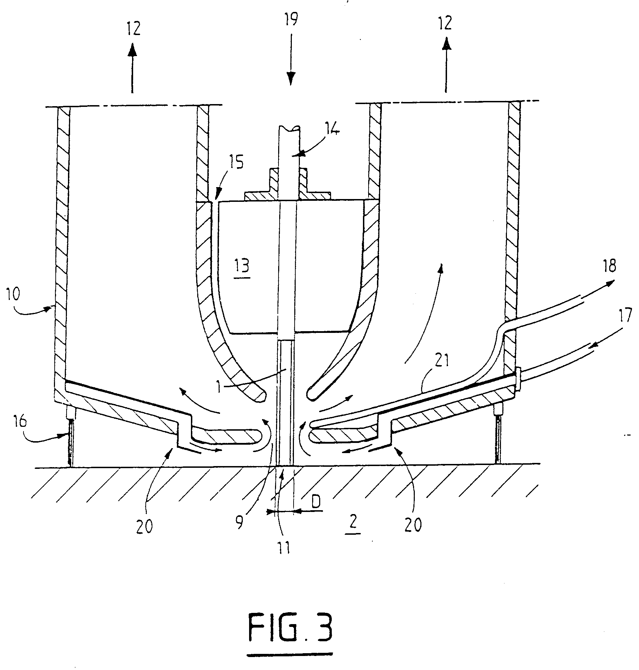

Sur la figure 3, il est représenté un dispositif suivant l'invention comportant une enceinte d'aspiration 10 raccordée à tout dispositif d'aspiration externe 12, comportant en particulier une filtration adaptée aux particules arrachées et contaminées, telle que des filtres par exemple de très haute efficacité (T.H.E.) ou dits "absolus" assurant une efficacité par exemple pouvant aller jusqu'à 99,999% DOP pour des particules de 0,3 microns et 99,98% Uranine pour des particules de 0,12 microns.

Le faisceau laser 1 peut être directement projeté depuis une source laser embarquée dans le dispositif, mais également peut être amené depuis une source laser 19 extérieure et éloignée du dispositif, tel qu'à l'extérieur de la zone contaminée par exemple, par un système de fibre optique 14 et un dispositif optique 13 de mise en forme du faisceau laser, afin d'assurer sa projection voulue sur la zone à traiter 11. Ce dispositif optique 13 peut être composé de système de lentilles ou miroirs plans et sphériques.

La surface du point d'impact sur cette zone 11 peut être d'un diamètre de l'ordre de quelques millimètres et de préférence 1 cm avec une seule source, mais il est possible éventuellement d'obtenir des surfaces plus grandes avec plusieurs sources, par exemple : en effet, le choix d'une surface plus grande permet une rapidité de traitement plus importante et une meilleure forme du panache 7 qui a alors une verticalité plus prononcée que si la surface du point d'impact 11 est petite, ce qui ne permet pas dans le cas d'une surface trop petite une bonne efficacité du système d'aspiration par la bouche 9.

Suivant la figure 3, il est également laissé une entrée d'air 15 autour du dispositif optique 13 de mise en forme du faisceau, afin d'éviter toute remontée et dépôt de particules contaminées à l'intérieur du support et du réceptacle de ce dispositif optique.

Un deuxième système optique 18, éventuellement également situé à l'extérieur de l'endroit où l'on veut effectuer ledit nettoyage, permet de mesurer l'intensité de fréquences d'émission spécifique des composants déterminés contenus dans les particules arrachées, tel que défini précédemment : lequel système optique comporte tout moyen 21, tel qu'également des micro-objectifs, des micro-lentilles associés à une fibre optique 21, qui peut être disposée à l'intérieur ou à l'extérieur sous l'enceinte 10 de la tête d'aspiration ou même dans l'épaisseur de la paroi de celle-ci pour déboucher dans la couronne de la bouche d'aspiration 9 ; ce moyen optique permet de capter lesdites émissions dans ledit panache 7 au voisinage et/ou au niveau de ladite bouche d'aspiration 9. La zone de capture d'émission est située à une distance de l'ordre de 2 à 10 millimètres par rapport à la surface à traiter, telle que les lignes d'émission des contaminants et de ses dérivés peuvent être clairement détectées. Le micro-objectif du moyen 21 se trouve suffisamment éloigné du panache ou de la plume 7, et est protégé contre le dépôt de particules du panache par les mêmes flux du gaz d'aspiration. Ce système optique 18 peut être de tout type connu, tel que par exemple, un spectromètre optique, un filtre spectral optique, un filtre interférentiel, assemblé et associé à un photodétecteur, tel que par exemple photorésistance, photodiode, photomultiplicateur, caméra CCD, électronique de détection et analyse.

Afin d'améliorer encore l'efficacité dudit dispositif d'aspiration, le dispositif selon l'invention peut comporter également au moins un orifice 20 d'injection d'un gaz réactif 17, tel que de l'oxygène par exemple, situé à la périphérie extérieure de la bouche d'aspiration 9 et dirigé dans la direction de celle-ci vers le point d'impact sur la zone traitée 11 du faisceau laser 1 ; en effet, d'une part, cet afflux de gaz supplémentaire permet d'accélérer l'effet d'aspiration, mais également grâce à la présence du gaz réactif, d'augmenter la vitesse de réaction en phase gazeuse des métaux des contaminants avec ce gaz, ce qui a pour effet d'augmenter la taille des molécules qui ont ainsi une plus grande probabilité d'être bien aspirées ; en effet, en cas de choc entre des petites et des grandes molécules, les petites risqueraient d'être ré-éjectées vers l'extérieur du dispositif d'aspiration et de se redéposer sur la surface, alors que si elles sont toutes de dimensions suffisantes, grâce à cet effet de réaction en phase gazeuse, elles ont plus de probabilité d'être entraînées dans le même sens à l'intérieur de la bouche d'aspiration 9. De plus, l'augmentation de la taille des molécules des composants et des dérivés de ceux-ci permet d'améliorer l'efficacité de leur filtrage : ceci nécessite d'autant plus, comme indiqué précédemment, de mesurer au moins deux fréquences d'émission dans le panache et dans la bouche d'aspiration, dont l'une est bien sûr celle des composants de contaminants que l'on veut éliminer, mais également l'autre ou les autres, celles d'au moins un des dérivés de cesdits contaminants, tels que ceux crées par lesdits gaz réactifs.

Pour interpréter la mesure de cesdites intensités, on peut en fait faire la somme de ces deux mesures au minimum, en les intégrant par rapport au temps, pour définir le seuil en-dessous duquel on peut considérer que la décontamination est atteinte.

Enfin, dans certains types de dispositifs, il peut être rajouté à une certaine distance de l'axe du faisceau laser 1 une jupe extérieure de confinement, éloignée de la bouche d'aspiration 9 pour empêcher éventuellement des particules qui n'auraient pas été aspirées, de partir dans l'ambiance et surtout de pouvoir accéder dans des zones difficiles telles que des angles, ou encore de pouvoir en incorporant des palpeurs dans cette jupe qui peut être de préférence constituée par des rangées de poils, contrôler la distance de l'ensemble du dispositif de nettoyage par rapport à la surface 3 du matériau 2 à nettoyer.

## Revendications

1. Procédé de décontamination de surface (3) d'un matériau (2), dont on veut enlever toutes particules ou organismes comprenant des composants de contaminants déterminés et de tout dérivé de ceux-ci et pouvant être fixées ou déposées sur ladite surface (3), et utilisant au moins un faisceau laser (1) pulsé dans la gamme de longueur d'ondes de l'ultraviolet et projeté sur ladite surface (3), et un dispositif d'aspiration (10) de gaz disposé à proximité de la zone (11) traitée par l'extrémité dudit faisceau laser (1), tel que :
- on déplace ledit faisceau (1) relativement par rapport à ladite surface (3), suivant un tracé déterminé pour traiter l'ensemble de celle-ci ;
- on règle la densité d'énergie dudit faisceau (1) entre 0,25 et 8 joules/cm² en fonction des caractéristiques dudit matériau à traiter (2), et sa fréquence d'impulsion entre 0,5 et 500 hertz en fonction de la vitesse de déplacement dudit faisceau (1) sur ladite surface (3), celui-ci éjectant, au fur et à mesure et d'une manière connue, des particules arrachées de la zone (11) traitée en formant un panache (7) au-dessus de celle-ci ;
- on aspire le gaz ambiant par une bouche d'aspiration (9) dirigée vers ledit faisceau laser (1) ;
- on dispose un système optique (18) permettant de mesurer l'intensité de fréquences d'émission spécifique desdits composants de contaminants déterminés desdites particules à enlever,
caractérisé en ce que :
- on choisit la longueur d'ondes dudit faisceau (1) laser dans la gamme de 190 à 360 nanomètres, avec une durée d'impulsion comprise entre 10 et 250 nanosecondes, suivant la nature du matériau (2) et l'épaisseur (4) de celui-ci dont on veut éliminer lesdites particules ainsi que l'épaisseur de ladite surface (3) ;
- on aspire ledit gaz ambiant tout autour du panache (7) grâce à une bouche d'aspiration (9) entourant ledit faisceau laser (1) symétriquement suivant son axe XX' et disposée assez proche de la surface (3), telle que la dite bouche d' aspiration entoure au moins l'extrêmité supérieure dudit panache (7), est située à une distance l de la surface (3) au plus égale à la hauteur h de ce panache (7) et a un diamètre d supérieur à celui dudit panache (7) et inférieur à trois fois celui-ci ;
- on dispose ledit système optique (18) comportant tout moyen pour capter lesdites émissions desdits composants de contaminants dans ledit panache (7) au voisinage de ladite bouche d'aspiration (9), et tel que :
- on mesure au moins deux fréquences d'émission dont l'une est celle des composants décontaminants et l'autre ou les autres, celles d'au moins un dérivé desdits contaminants issu de la réaction du faisceau laser (1) sur la surface (3) du matériau (2) ou préexistant dans cette surface ou dans l'air ambiant.

2. Procédé de décontamination de surface (3) suivant la revendication 1, caractérisé en ce qu'on dispose au moins un orifice (20) d'injection d'un gaz réactif (17) dirigé vers le point d'impact sur la zone traitée (11) par le faisceau laser (1).

3. Procédé de décontamination de surface selon l'une quelconque des revendications 1 ou 2, caractérisé en ce que on effectue au moins deux tirs d'impulsion laser sur chaque dite zone traitée (11) et on contrôle ladite intensité de fréquence d'émission desdits composants de contaminants déterminés dans les particules enlevées et situées dans le panache (7) du deuxième tir, et si la valeur obtenue de cette intensité est supérieure à un seuil donné, on continue les tirs sur la même zone (11) sans déplacement du laser jusqu'à obtenir au plus ce seuil.

4. Procédé de décontamination de surface selon l'une quelconque des revendications 1 à 3, caractérisé en ce qu'on effectue au moins deux passages par déplacement relatif du faisceau laser (1) sur ladite surface (3), avec des paramètres et des réglages dudit faisceau laser différents, afin de faire subir à ladite surface (3) au moins un deuxième traitement différent de celui du nettoyage et suivant les mêmes phases de procédé que pour celui-ci.

5. Dispositif de décontamination de surface (3) d'un matériau (2), sur lequel sont fixées ou déposées toutes particules ou organismes comprenant des composants de contaminants déterminés et devant faire l'objet de ladite décontamination, comprenant au moins un faisceau laser (1) pulsé dans la gamme de longueur d'ondes de l'ultraviolet et projeté par tout moyen (13, 14) sur ladite surface (3), et un dispositif d'aspiration (10) de gaz disposé au voisinage de la zone (11) traitée par ledit faisceau laser (1), lequel dispositif de décontamination comprend une bouche d'aspiration (9) dirigée vers ledit faisceau laser (1) et tout système permettant le déplacement de l'ensemble du dispositif de décontamination relativement par rapport à ladite surface (3) à nettoyer suivant un tracé déterminé dudit faisceau laser (2) pour traiter l'ensemble de celle-ci, lequel faisceau laser éjecte, au fur et à mesure et d'une manière connue, des particules arrachées à la zone (11) à traiter en formant un panache (7) au-dessus de celle-ci, caractérisé en ce que ledit faisceau laser (1) est dans une gamme de longueur d'ondes comprise entre 190 et 360 nanomètres, et suivant le type de la source laser choisie, d'une durée d'impulsion entre 10 et 250 nanosecondes, la densité d'énergie du faisceau laser étant définie entre 0,25 et 8 Joules/cm² suivant la nature et les caractéristiques du matériau (2) et l'épaisseur (4) de la couche contaminée et celle du support (2) et dans laquelle se situent lesdites particules que l'on veut éliminer, ladite bouche d'aspiration (9) entourant ledit faisceau laser (1) symétriquement suivant son axe XX' et disposée assez proche de la surface (3), entoure au moins l'extrémité supérieure dudit panache (7), est située à une distance l de la surface (3) au plus égale à la hauteur h de ce panache (7) et a un diamètre d supérieur à celui dudit panache (7) et inférieur à trois fois celui-ci.

6. Dispositif de décontamination de surface (3) selon la revendication 5, caractérisé en ce qu'il comprend un système optique (18) permettant de mesurer l'intensité d'au moins deux fréquences d'émission spécifique desdits contaminants déterminés pouvant être contenus dans les particules à arracher, et d'au moins un dérivé desdits contaminants, lequel système optique comporte tout moyen (21) pour capter lesdites émissions dans ledit panache (7) au voisinage de ladite bouche d'aspiration (9).

7. Dispositif de décontamination selon l'une quelconque des revendications 5 ou 6, caractérisé en ce que la forme extérieure de l'enceinte du dispositif d'aspiration (10) autour de ladite bouche d'aspiration (9) et en regard de la surface (3), est un paraboloide de révolution autour de l'axe XX' du laser (1).

8. Dispositif de décontamination selon l'une quelconque des revendications 5 à 7, caractérisé en ce qu'il comporte au moins un orifice (20) d'injection d'un gaz réactif (17) vers le point d'impact sur la zone traitée (11) par le faisceau laser (1).

9. Dispositif de décontamination selon l'une quelconque des revendications 5 à 8, caractérisé en ce que ledit faisceau laser (1) est guidé et dirigé vers ladite surface (3) par au moins une fibre optique (14), depuis une source laser (19) située à toute distance compatible avec ledit dispositif.

## Claims

1. A method of decontaminating the surface (3) of a material (2) from which it is desired to remove all particles or organisms including determined contaminating components and any derivatives thereof and capable of being fixed or deposited on said surface (3), the method using at least one pulsed laser beam (1) in the ultraviolet wavelength range that is directed onto said surface (3), and a gas suction device (10) disposed close to the zone (11) treated by the end of said laser beam (1), such that:
• said beam (1) is displaced relative to said surface (3) along a determined path to treat all of said surface;
• the energy density of said beam (1) is set to lie in the range 0.25 joules per square centimeter (J/cm²) to 8 J/cm² as a function of the characteristics of said material to be treated (2), and the pulse rate of the beam is set to lie in the range 0.5 Hz to 500 Hz as a function of the displacement speed of said beam (1) over said surface (3), the beam ejecting particles torn from the treated zone (11) as it moves, in known manner, thereby forming a plume (7) above the zone;
• the surrounding gas is sucked up via a suction orifice (9) directed towards said laser beam (1); and
• an optical system (18) is available to measure the intensity of emission frequencies specific to said determined contaminating components of said particles to be removed;
the method being characterized in that:
• the wavelength of said laser beam (1) is selected to lie in the range 100 nanometers (nm) to 360 nm, with pulse duration lying in the range 10 nm to 250 nm, depending on the nature and the thickness (4) of the material (2) constituting said particles to be eliminated, and also on the thickness of said surface (3);
• said surrounding gas is sucked up all around the plume (7) by a suction orifice (9) surrounding said laser beam (1) symmetrically about its axis XX' and disposed quite close to the surface (3), such that said suction orifice surrounds at least the top end of said plume (7), is situated at a distance *l* from the surface (3) that is no greater than the height h of the plume (7), and has a diameter d greater than the diameter of said plume (7) and that is less than three times the diameter of said plume;
• said optical system (18) including means for picking up said emissions from said contaminating components is disposed in said plume (7) in the vicinity of said suction orifice (9), and such that:
• at least two emission frequencies are measured, of which one is that of the contaminating components and the other(s) being that/those of at least one derivative of said contaminating components due to the reaction of the laser beam (1) on the surface (3) of the material (2) or pre-existing in said surface or in the surrounding air.

2. A surface decontamination method according to claim 1, characterized in that at least one orifice (20) for injecting a reagent gas (17) is disposed so as to be directed towards the point of impact of the laser beam (1) on the treated zone (11).

3. A surface decontamination method according to claim 1 or 2, characterized in that at least two laser pulse shots are applied on each of said treated zones (11), and the said intensity of the emission frequency of said determined contaminating components is monitored in the particles removed and located in the plume (7) of the second shot, and if the value obtained for said intensity exceeds a given threshold, shots are continued in the same zone (11) without displacing the laser until no more than said threshold is obtained.

4. A surface decontamination method according to any one of claims 1 to 3, characterized in that at least two relative displacement passes between the laser beam (1) and said surface (3) are performed using different parameters and settings for said laser beam, so as to subject said surface (3) to at least one second treatment different from the cleaning treatment, and using the same method steps as those of the cleaning treatment.

5. Apparatus for decontaminating the surface (3) of a material (2) on which there are fixed or deposited particles or organisms including determined contaminating components that are to be subjected to said decontamination, the apparatus comprising at least one pulsed laser beam (1) in the ultraviolet wavelength range directed by any appropriate means (13, 14) onto said surface (3), and gas suction apparatus (10) disposed in the vicinity of the zone (11) treated by said laser beam (1), which decontamination apparatus comprises a suction orifice (9) directed towards said laser beam (1) and a system enabling the decontamination apparatus to be displaced as a whole relative to said surface (3) to be cleaned along a determined path to enable said laser beam (2) to treat all of the surface, which laser beam ejects particles torn away from the zone (11) to be treated during its displacement, thereby forming a plume (7) above said zone, the apparatus being characterized in that said laser beam (1) has a wavelength lying in the range 190 nanometers (nm) to 360 nm, and depending on the type of laser source selected, and has a pulse duration lying in the range 10 nm to 250 nm, the energy density of the laser beam lying in the range 0.25 Joules per square centimeter (J/cm²) to 8 J/cm² depending on the nature and the characteristics of the material (2) and on the thickness (4) of the contaminated layer and on the thickness of the surface (3) in which the said particles to be eliminated are situated, said suction orifice (9) surrounding said laser beam (1) symmetrically about its axis XX' and being located quite close to the surface (3), surrounding at least the top end of said plume (7), and situated at a distance *l* from the surface (3) no greater than the height h of said plume (7) and having a diameter d greater than the diameter of said plume (7) and less than three times said diameter.

6. Surface decontamination apparatus according to claim 5, characterized in that it includes an optical system (18) for measuring the intensity of at least two specific emission frequencies of said determined contaminants that may be contained in the particles to be torn off and of at least one derivative of said contaminants, which optical system comprises means (21) for picking up said emissions in said plume (7) in the vicinity of said suction orifice (9).

7. Decontamination apparatus according to claim 5 or 6, characterized in that the outside shape of the enclosure of the suction apparatus (10) around said suction orifice (9) and facing said surface (3) is a paraboloid of revolution about the axis XX' of the laser (1).

8. Decontamination apparatus according to any one of claims 5 to 7, characterized in that it includes at least one orifice (20) for injecting a reagent gas (17) towards the point of impact of the laser beam (1) on the treated zone (11).

9. Decontamination apparatus according to any one of claims 5 to 8, characterized in that said laser beam (1) is guided and directed towards said surface (3) by at least one optical fiber (14) from a laser source (19) situated at any distance that is compatible with said apparatus.

## Patentansprüche

1. Verfahren zum Dekontaminieren einer Oberfläche (3) eines Materials (2), von der man alle Partikel oder Organismen, die bestimmte kontaminierende Komponenten umfassen, und alle Derivate davon und die fest oder abgelagert auf der Oberfläche (3) sich befinden können, unter Verwendung wenigstens eines Laserstrahls (1) entfernen möchte, der gepulst ist und im ultravioletten Wellenlängenbereich liegt und auf die Oberfläche (3) gerichtet ist, sowie eine Saugvorrichtung (10) für Gas in der Nähe der Zone (11), die durch den Laserstrahl (1) bearbeitet wird, wobei:
man den Strahl (1) relativ in bezug auf die Oberfläche (3) entlang einer vorgegebenen Spur zum Bearbeiten der Gesamtheit dieser bewegt;
man die Energiedichte des Strahls (1) zwischen 0,25 und 8 J/cm² in Abhängigkeit von Eigenschaften des zu bearbeitenden Materials (2) und seine Impulsfrequenz zwischen 0,5 und 500 Hz in Abhängigkeit von der Geschwindigkeit der Bewegung des Strahls (1) auf der Oberfläche (3) einstellt, wobei diese nach und nach auf bekannte Art und Weise Partikel abgibt, die in der behandelten Zone (11) angeheftet sind, so daß sie oberhalb dieser eine Abgasfahne (7) bilden,
man das Gas in der Umgebung über eine Saugmündung (9) absaugt, die auf den Laserstrahl (1) gerichtet ist; man ein optisches System (18) anordnet, das es ermöglicht, die spezifische Intensität der Emissionsfrequenzen der bestimmten kontaminierenden Komponenten der zu entfernenden Partikel zu messen,
dadurch **gekennzeichnet,** daß
man die Wellenlänge des Laserstrahls (1) im Bereich von 190 bis 360 nm wählt bei einer Impulsdauer zwischen 10 und 250 ns, je nach Eigenschaft des Materials (2) und der Dicke (4) desselben, von dem man die Partikel entfernen will, wie auch der Dicke der Oberfläche (3);
man das Gas in der Umgebung ganz und gar um die Abgasfahne (7) absaugt mittels Saugmündung (9), die den Laserstrahl (1) symmetrisch zu seiner Achse (XX') umgibt und ausreichend nah an der Oberfläche (3) angeordnet ist, wobei die Saugmündung mindestens das obere Ende der Abgasfahne (7) umgibt und in einem Abstand l von der Oberfläche (3) angeordnet ist, der höchstens gleich der Höhe h dieser Abgasfahne (7) ist und einen Durchmesser (d) hat, der größer als die Abgasfahne (7) ist und kleiner als das Dreifache davon;
man das optische System (18) mit Vorrichtungen zum Auffangen der Emissionen der kontaminierenden Komponenten in der Abgasfahne (7) in der Nähe der Absaugmündung (9) anordnet, und wobei:
man wenigstens zwei Emissionsfrequenzen mißt, von denen eine die von dekontaminierten Komponenten und die andere oder die anderen wenigstens von einem Derivat der kontaminierenden Komponenten ist, die ausgestrahlt wird bei der Reaktion des Laserstrahls (1) auf der Oberfläche (3) des Materials (2) oder schon vorher auf dieser Oberfläche oder in der Umgebungsluft vorhanden waren.

2. Verfahren zum Dekontaminieren einer Oberfläche (3) nach Anspruch 1,
dadurch gekennzeichnet, daß
man wenigstens eine Öffnung (20) zum Injizieren eines reaktiven Gases (17) auf den Punkt der Wechselwirkung auf der durch den Laserstrahl (1) behandelten Zone (11) gerichtet anordnet.

3. Verfahren zum Dekontaminieren einer Oberfläche nach einem der Ansprüche 1 oder 2,
dadurch gekennzeichnet, daß
man wenigstens zwei Laserimpulse auf jede behandelte Zone (11) abfeuert und man die Intensität der Emissionsfrequenz der bestimmten kontaminierenden Komponenten unter den entfernten und in der Abgasfahne (7) des zweiten Schusses befindlichen Partikel untersucht, und wenn der erhaltene Wert dieser Intensität größer als eine gegebene Schwelle ist, man die Schüsse auf der gleichen Zone (11) ohne Verschieben des Lasers wiederholt, bis man höchstens die Schwelle erreicht.

4. Verfahren zum Dekontaminieren einer Oberfläche nach einem der Ansprüche 1 bis 3,
dadurch gekennzeichnet, daß
man wenigstens zwei Passagen durch relatives Verschieben des Laserstrahls (1) auf der Oberfläche (3) bewirkt mit unterschiedlichen Parametern und Steuerungen des Laserstrahls, um die Oberfläche (3) wenigstens zwei unterschiedlichen Behandlungen zum Reinigen und anschließend den gleichen Verarbeitungsphasen zu unterwerfen.

5. Vorrichtung zum Dekontaminieren einer Oberfläche (3) eines Materials (2), auf welcher Partikel oder Organismen, die bestimmte kontaminierende Komponenten vor der Dekontaminierung des Objekts umfassen, befestigt sind oder angeordnet sind, die wenigstens einen Laserstrahl (1), gepulst im Bereich der Wellenlängen des Ultraviolett und projiziert durch Vorrichtungen (13, 14) auf die Oberfläche (3), und eine Saugvorrichtung (10) für Gas in der Nähe der durch den Laserstrahl (1) behandelten Zone (11) umfaßt, wobei die Vorrichtung zum Dekontaminieren eine Saugmündung (9), gerichtet auf den Laserstrahl (1), und ein System, das das Verschieben der Einheit der Dekontaminierungsvorrichtung relativ in Bezug auf die Oberfläche (3) zum Reinigen entlang einer vorgegebenen Spur des Laserstrahls (2) erlaubt, um die Gesamtheit dieser zu bearbeiten, wobei der Laserstrahl nach und nach auf bekannte Art und Weise Partikel abstrahlt, die in der zu behandelnden Zone (11) befestigt sind, so daß über dieser eine Abgasfahne (7) gebildet wird, umfaßt,
dadurch gekennzeichnet, daß
der Laserstrahl (1) einen Wellenlängenbereich zwischen 190 und 360 nm und je nach gewählter Laserquelle eine Impulsdauer zwischen 10 und 250 ns aufweist, wobei die Energiedichte des Laserstrahls definiert zwischen 0,25 und 8 J/cm² je nach Wesen und Eigenschaften des Materials (2) und Dicke (4) der kontaminierten Schicht und der des Trägers (2) und in welcher sich die Partikel befinden, die man eliminieren möchte, liegt, wobei die Saugmündung (9) den Laserstrahl (1) symmetrisch entlang seiner Achse XX' umgibt und ausreichend nahe an der Oberfläche (3) angeordnet ist, wobei wenigstens das obere Ende der Abgasfahne (7) umgeben wird, und angeordnet ist in einem Abstand l von der Oberfläche (3), der höchstens gleich der Höhe h dieser Abgasfahne (7) ist und einen Durchmesser d hat, der größer als der der Abgasfahne (7) und kleiner als dreimal derselbe ist.

6. Vorrichtung zum Dekontaminieren einer Oberfläche (3) nach Anspruch 5,
dadurch gekennzeichnet, daß
sie ein optisches System (18) umfaßt, das es erlaubt, die Intensität von wenigstens zwei speziellen Emissionsfrequenzen der bestimmten Kontaminanten zu messen, die enthalten sein können in den abzutragenden Partikeln, und wenigstens eines Derivats der Kontaminanten, wobei das optische System eine Vorrichtung (21) umfaßt, um die Emissionen in der Abgasfahne (7) in der Nähe der Saugmündung (9) aufzufangen.

7. Vorrichtung zum Dekontaminieren nach einem der Ansprüche 5 oder 6,
dadurch gekennzeichnet, daß
die äußere Form des Umfangs der Saugvorrichtung (10) um die Saugmündung (9) und in bezug auf die Oberfläche (3) ein rotationssymmetrischer Paraboloid um die Achse XX' des Lasers (1) ist.

8. Vorrichtung zum Dekontaminieren nach einem der Ansprüche 5 bis 7,
dadurch gekennzeichnet, daß
sie wenigstens eine Öffnung (20) zum Injizieren eines reaktiven Gases (17) auf den Wechselwirkungspunkt auf der von dem Laserstrahl (1) behandelten Zone (11) umfaßt.

9. Vorrichtung zum Dekontaminieren nach einem der Ansprüche 5 bis 8,
dadurch gekennzeichnet, daß
der Laserstrahl (1) geleitet und geführt wird zu der Oberfläche (3) mittels wenigstens einer optischen Faser (14) von einer Laserquelle (19), die sich in entsprechender Entfernung von der Vorrichtung befindet.
